# EUROPEAN PATENT APPLICATION

(11) **EP 1 860 586 A1**
(43) Date of publication of application: **28.11.2007**
(21) Application number: 06010318.1
(22) Date of filing: 18.05.2006
(51) Int. Cl.: G06F 21/00

(54) **Method and managing unit for managing the usage of digital content, rendering device**

(71) Applicant: Vodafone Holding GmbH, 40027 Düsseldorf (DE)
(72) Inventor: Koraichi, Najib, 6333 CT Schimmert (NL); Montaner, Javier, 6211 GD Maastricht (NL)
(74) Representative: Müller, Thomas

(57) **Abstract**

The present invention relates to a method for managing the usage of digital content on at least one rendering device (2), wherein the at least one rendering device (2) is part of a system with at least one central management unit (3). The method is characterized in that the central management unit (3), upon receipt of a request for registering a rendering device (2) to a domain of rendering devices (2), issues a verification request including a parameter relating to a user identity. Furthermore, a central management unit (3) for managing the usage of digital content on at least one rendering device (2) is described, wherein the management unit (3) comprises a storage unit for storing rendering device information sorted by users. Finally a rendering device (2) is disclosed.

## Description

The present invention relates to a method and a managing unit for managing the usage of digital content as well as to a rendering device.

Content owners have promoted the need for managing digital content, as such content can be copied and shared, which results in considerable losses for the content owners.

The term Digital Rights Management (DRM) encloses a number of technologies that have been developed to protect the intellectual property rights of content creators or owners and providers.

The most basic DRM systems protect content by tying digital licenses to a specific device, that is, the content can only be rendered in one single device. Technically this solution is achieved by encrypting the digital licenses with a unique key securely stored in the device. If a user makes a copy of a protected piece of content and its license and moves them to another device, the new device will not be able to render the content because the digital licenses will not be valid in this new device.

More advanced solutions, like OMA (Open Mobile Alliance) DRM version 2.0 domains, allow for protection of the content for a set of devices. A domain is a set of the devices that share the same domain key that is used to protect the digital licenses. This way all the devices in the domain can use the same digital licenses to render protected content. Devices outside the domain cannot understand these digital licenses so they cannot render the content.

Although these solutions offer powerful protection mechanisms that provide maximum control to content providers, they have important drawbacks from the user perspective.

When a user purchases content, he does not necessarily know in which device or set of devices he is going to play it. Even if the user knows the device, where he will initially render the content, he will probably like to play it later on other devices. And if the user decides to renew his device, he will lose his "old" content, as the new device will not be part of the domain.

There is a clear mismatch between the functionality provided by current DRM solutions and the user's expectations based on his experience with content on physical media, such as commercial unprotected CDs and DVDs.

The use of domains partially solves these problems. The user merely needs to add his devices to a domain. Once a device has joined the device domain, it is able to render all the content that is associated to that specific device domain, i.e. encrypted for the device domain.

One way of allowing a user to add a device to a device domain is described in US2004/0103312A1. In that enrolment method a device is added to an existing domain by obtaining domain information from other devices already in the domain. With this domain information available, the new device contacts a key issuer to complete the registration to the device domain.

With the known DRM domain solutions, the end user is provided with a lot of flexibility, as he can play content anywhere. The known solutions present, however, a major drawback. If devices are continuously being added to a device domain, an uncontrolled and unlimited number of devices could be part of one single global device domain. Since this is an unacceptable scenario for content providers, each DRM system defines its own policies to control the flexibility of domains. For the end user that means, that he is confronted with different experiences depending on the policies prevailing in the respective DRM domain. Also the rendering of content on a device, which is only used sporadically, is difficult with the known solutions as such a device would not be part of an existing device domain.

The problem to be solved by the present invention is thus to provide a solution, which allows flexibility and easy handling of digital content for the end user but at the same time ensures the consideration of the content owner's and content provider's needs.

The invention is based on the finding, that this problem can be solved by providing a user-centric domain rather than a device-centric domain.

According to a first aspect of the invention the problem is solved by a method for managing the usage of digital content on at least one rendering device, wherein the at least one rendering device is part of a system with at least one central management unit. The method is characterized in that the central management unit, upon receipt of a request for registering a rendering device to a domain of rendering devices, issues a verification request including a parameter relating to a user identity.

The rendering device can be any device for displaying, presenting, playing-back or otherwise making the digital content available to a user. The rendering device may for example be a DVD-player, a CD-player, a computer or suchlike devices. The digital content may comprise pictures, movies, music and/or programs.

The central management unit may be a remote server on the network of a communication network, such as a mobile network, or in the Internet. After the registration of a rendering device in a domain, i.e. after the addition of the rendering device to the domain, the rendering device will be able to render protected content in accordance with license policies applicable for the domain. The licenses for rendering the content may be stored and managed at the central management unit.

The policies, which are applied to decide upon the registration of a rendering device to a domain, according to the present invention, include at least one parameter relating to the user. The user identity may be represented by user identification, i.e. user ID, which may be a number stored on a hardware token, such a SIM card of a mobile phone. By including a user identity in the requirements for adding a rendering device to a domain, a user-centric domain can be established. This domain is not represented by a mere set of devices but by a set of devices associated to a specific user or to a group of users.

The assignment of the domain to a user or a group of users can be realised in a secure fashion, since information relating to the user identity will be checked before registration. For this reason the verification request is issued and includes a parameter relating to the user identity. With the inventive verification request the user identity itself may be confirmed and/or authenticated, i.e. asserted. In addition the verification request allows for monitoring of registration policies, wherein a parameter relating to the user is included. Such policies may in particular relate to the association of a user to the specific device to be added to the domain. With such a verification it is possible to establish domains, which can securely only be enlarged by an authorized user. The inventive method is thus flexible but nevertheless secure.

According to one embodiment of the invention the registration request is received from the rendering device and includes user identity information. In this case the central management unit will be provided with all information necessary for registration of the rendering device to the domain. In particular, the user identity information, which defines the domain to which the rendering device is to be added, as well as information on the rendering device, preferably a device ID, will be available a the central management unit. The verification performed subsequently to the receipt of the registration request, may be the confirmation and/or authentication of the user identity. The verification may in addition be the authentication of an association of the user to the rendering device, which is to be added to the domain.

The user identity information, which is received at the central management unit, may have been transmitted to, or entered at, the rendering device by the user. In this case the verification request from the central management unit will be transmitted to either the rendering device and/or a remote assertion server. The verification request sent to the assertion unit will include the request to confirm the user identity, provided by the rendering device. The request sent to the rendering device may include either a request for assertion of the user identity or a request for authentication of the association of the user to the device.

The assertion unit according to the present invention is a trusted party to the central management unit. That means the central management unit and the assertion unit belong to the same circle of trust. The assertion unit may also be referred to as an identity provider. An example of an identity provider is a Liberty Alliance standardised identity provider, which is federated with the central management unit.

The registration request received from the rendering device at the central management unit may be a specific request for registration. It is, however, possible that the registration request is a request for rendering a piece of digital content. In this case, the central management unit will compare the device information in combination with the user identity to entries within the central management unit. If the device is not part of the domain for that specific user, the rendering request may be interpreted as a request for registration to the domain and the registration policies, which will be described later, may be applied.

The registration request may also be received at the central management unit from the user and include an identification of the device, which should be added to the domain. Upon receipt of this registration request, the central management unit may issue a verification request, to confirm the user identity. The confirmation request may be issued internally at the central management unit, i.e. entries within the central management unit may be compared against the information provided by the user.

Alternatively the confirmation request may be issued to a remote assertion unit. In addition an authentication request to assert the user identity will preferably be issued to the remote assertion unit. The thus initiated assertion may include the transmission of a request for responding to a challenge, such as the prompting to enter a secure number.

The request for responding to a challenge may be issued from the assertion unit and transmitted to the central management unit to be forwarded to the user. The forwarding of the request from the central management unit to the user may be performed by transmitting the request to the rendering device, where the request may either be displayed or further transmitted to a mobile device belonging to the user. The request may, however, also be transmitted directly from the central management unit to the mobile device of the user. Finally, it is possible to transmit the request to the user by displaying the request at a user interface of the central management unit. The described assertion may also be performed, if the registration request was originally received from the rendering device or a mobile device belonging to the user.

If the initial registration request did not include user identity information, the verification request may comprise a request for user identity information. Such a request may be issued to the rendering device, which in turn forwards the request for user identity information to the user. Such forwarding can be realised by displaying the request to the user on the rendering device or on a mobile device belonging to the user. It is, however, also possible that the request for user identity information will be forwarded from the rendering device to a hardware token indicative of the user. Such a token may be a SIM card of a mobile phone. In this case the user will not have to manually provide the user identity information. The request for user identity information may also be transmitted directly from the central management unit to a mobile device or a token within the mobile device belonging to the user.

Alternatively or additionally the verification request may comprise a confirmation request for confirming the association of the user to the specific rendering device. For this purpose, in the inventive user-centric domain policies maybe implemented, which determine, whether a device can be part of a domain based on a relationship with the user. One example of a policy using a parameter related to the user identity is, that the user has to prove his ownership of given device, before the rendering device will be added to the domain. Also the presence of the user in the closed proximity of a given device may be part of a policy.

According to one embodiment of the inventive method, the central management unit will therefore identify the policy prevailing to the domain, to which the rendering device is to be added. In accordance with such a policy, the central management unit will then issue the respective confirmation request to confirm the association between the user and the rendering device as prescribed by the policy. This confirmation request may be issued or transmitted to the rendering device, the user or a mobile device belonging to the user. Upon receipt of a response to this confirmation request, the central management unit will check whether the policy parameters are fulfilled and depending on the result will add the rendering device to the domain.

The confirmation of the association of the user to the rendering device is preferably only carried out after the user identity has been confirmed and/or asserted. It is also possible to initially, upon receipt of a registration request, first determine at the central management unit, whether the device is already entered in the domain. In that case a verification of the user identity is not necessary.

Once a rendering device is added to the domain, it will be able to render any content, for which the user has obtained the rights. The central management unit thus controls the devices for each user and acts as an intermediator for those devices. The actual rendering of digital content within the domains will depend on license policies for the respective content, which may also be managed by the central management unit.

According to a further aspect the present invention relates to a management unit for managing the usage of digital content on at least one rendering device. The management unit comprises a storage unit for storing rendering device information sorted by user. By providing such a management unit devices associated with a user can be identified as being part of the user-centric domain of that user. The central management unit will thus be able to manage and monitor the addition of rendering devices to a domain of a user. In addition the usage of digital content according to license policies prevailing to the domain may be monitored at the central management unit. The storing of devices in a user-centric domain is advantageous over prior art domain, since in most cases licenses to render digital content will be purchased by a user. The rights to render the content can therefore easily be applied to the devices of the domain, as these belong or are otherwise associated to the user. If one common domain is to be established for more than one user, the central management unit may group the devices of each of the users together. The addition of devices to such a common domain may then only be performed by the users, who established the domain. This can be monitored, since according to the invention the user identity and preferably also the association of the user to the rendering device is verified.

With the inventive central management unit it is thus possible to extract some functionality from an entity known as the licence issuer or rights issuer. Whereas in the prior art the creation and monitoring of domains had to be carried out by this entity, according to the present invention the central management unit will be in charge of the creation and management of domains for a user or a group of users.

According to a further embodiment, the central management unit comprises a comparison unit for comparing user identity information to entries of the storage unit. By providing such a comparison unit, the central management unit may before initiating a registration procedure, compare received user identity information to user identity information, for which domains have been established at the central management unit. A verification of user identity and a registration of a device will only have to be carried out, if the rendering device, which is to be registered, is not part of the domain for the user. In addition, the comparison unit may be used to determine the policies to the applied to devices, when they are to be added to a domain. Finally the comparison unit allows the monitoring of such policies, which according to the invention include at least one parameter relating to the user identity.

Examples of policies that can be used to decide upon the inclusion of a rendering device in a domain may comprise the proof of ownership of the rendering device by the user. Also the location of the device may be used within a policy and may be associated to the user. Further more the close proximity of the user to the device or authorisations of the user for the rendering device to be added to the domain may be included within the policies.

The user identity may be represented in these policies by a secure token, which is associated to the user. Tokens may for example be the user's UICC (Universal IC-Card), USIM (universal subscriber identity module), RUIM (removable user identity module) and/or a SIM (subscriber identity module). These tokens are being used within telecommunication networks and will therefore be available for the invention. It is not necessary, to create a new user identity representation. In addition the tokens used in telecommunication networks are managed by an assertion unit, which may therefore serve as the assertion unit for the present invention to confirm and/or assert the user identity provided by the token. By using such tokens, the present invention can be implemented easily in existing systems, in particular in existing networks.

The management unit may also comprise an authentication unit for creating authentication requests to be transmitted to a remote assertion unit, the rendering device and/or a mobile device of the system, which is associated to the user. The authentication unit may create the request for assertion of the user identity, which is sent to the assertion unit. The authentication unit may also or alternatively create an authentication request to confirm an association of the user to a given device. This request will be transmitted to either the mobile device of the user or the rendering device, which is to be added to the domain.

Finally the management unit may comprise a communication unit for communicating with at least one remote assertion unit. The communication with the assertion unit, where the user identity can be confirmed an authenticated, increases the reliability of the management unit and in particular of the management of domains at the central management unit. Misuse can thus be avoided.

The communication unit may also serve to communicate with a remote content server. By means of this communication unit the content to be rendered on one or more of the devices managed by the central management unit may be received at the management unit and may be stored. Finally the communication unit may also communicate with a rights server. The rights server, which might also be referred to as a License Issuer or Rights Issuer, creates the digital licenses for digital content. By means of communication with this rights server, the licenses may be made available at the central management unit and the rendering of digital content on rendering devices of a domain may be managed from the central management unit.

The present invention also relates to a rendering device for rendering of digital content in a system with at least one central management unit for managing the usage of digital content on the rendering device. The rendering device comprises at least one communication unit for communication with at least one mobile device and/or the central management unit. By enabling the rendering device to communicate with a mobile device and or the central management unit, the rendering device can provide information and obtain information from the respective entities. This information may be forwarded to the entity requesting the information. For example user identity information may be obtained from the mobile device or a token, within the mobile device at the rendering device. This information may be forwarded to the central management unit, where the addition of the device may be decided upon based on the received information. The rendering device may also use this information internally to verify compliance with a stored licence policy.

The rendering device may communicate to a mobile device via any NFC (Near Field Communication), Bluetooth, Zigbee or other known communication standards for communication between devices, which are close to each other. By using such a communication standard, the communication or the successful establishment of a communication connection between the rendering device and the mobile device, may indicate the proximity of the user or his token to the rendering device. This proximity can be used as information for the decision at the central management unit as to whether the device is to be added to a domain or for license policies, which require the proximity of the user to the rendering device.

The connection to the central management unit may be established via a communication network and/or the Internet. Via this connection information, which is needed at the central management unit for the registration process of the device can be provided. After registration the communication between the central management unit and the rendering device may be used to transmit information relating to license policies, which may be managed at the central management unit.

According to a preferred embodiment the communication unit of the rendering device comprises a receiving entity for receiving user identification information from the mobile device, in particular from a token within the mobile device. The token within the mobile device may for example be a user's UICC (Universal IC-Card), USIM (universal subscriber identity module), RUIM (removable user identity module) and/or a SIM (subscriber identity module).

The user-centric domain, which can be established and managed with the present invention, the user identity can be involved in the registration of a rendering device to a domain as well as in the content licenses. As the user identity is confirmed and/or asserted and the association between the user and the device may be authenticated, the suggested user-centric domain allows a secure and convenient way of using digital content on different rendering devices.

The units or entities within the mobile device may be realised as physical units and/or software programs.

Features and advantages described in context with the inventive method also applied to the inventive rendering device and inventive management unit, and vice versa.

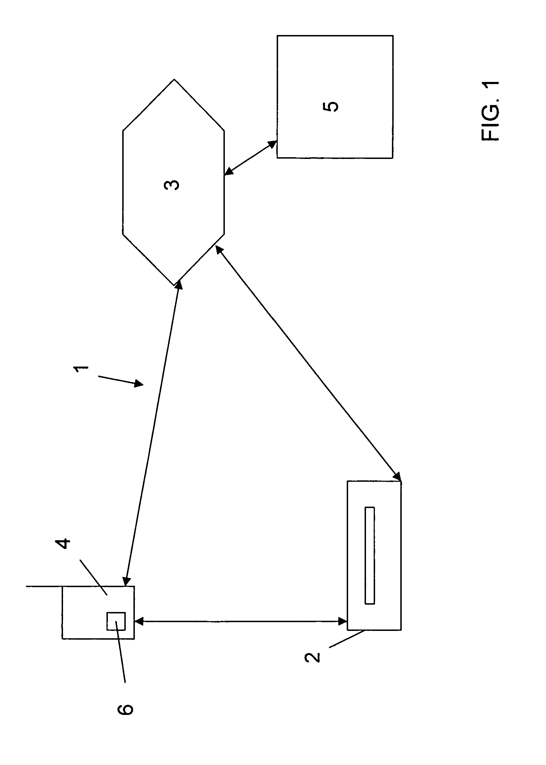

The invention will now be described again with reference to the enclosed Figure 1, which shows a system for one embodiment of the inventive method.

The system 1 comprises a rendering device 2, a central management unit 3 and a mobile device 4. The rendering device 2 in Figure 1 is a DVD player but may be any other kind of rendering device, such as a CD-Player. The mobile device 4 is preferably a mobile phone or another handheld communication device. The system 1 further comprises a remote assertion unit 5.

In this system 1 various embodiments of the inventive method can be realised. In particular the verification of information relating to a user can be performed. The verification preferably comprises two levels. In one level user related information can be confirmed and in the other level information can be authenticated. In particular, confirmed user related information, such as the user identity, for example provided as a user ID number, can be authenticated to assert the identity of the user and/or information related to the association of a user to a device can be authenticated. Preferably the information related to the association of the user, whose user identity has been confirmed and authenticated, to a specific device is being authenticated. The security of the method can thereby be optimised.

In one embodiment a user, who wants to register the DVD player 2 to his domain may contact the central management unit 3. This contact may for example be established via an interface of the central management unit. The user will provide an identification of his identity, in particular a user ID assigned to the user. The central management unit 3, upon receipt of the registration request, which at this stage only comprises the user ID, will issue a verification request to the assertion unit 5. The assertion unit 5 will check internal entries for the user and confirm the user ID to the central management unit 5, if the entries match. In addition or alternatively, the assertion unit 5 may issue a challenge to the central management unit 3 for transmittal to the user. The transmission of the challenge from the central management unit 3 to the user may be done via display at the interface. The user will have to respond to the challenge. The response is then forwarded from the central management unit 3 to the assertion unit 5, where the actual response will be compared to the expected response. If the responses match, the assertion unit 5 will issue an assertion statement, indicating, that the user ID originally provided is accurate. Thereby the user is identified and his identity is confirmed and asserted.

Upon confirmation and authentication of the user identity, the user may provide an indication of the device 2, which he wishes to include into his domain. This indication of the device may also be done earlier in the process, e.g. together with the providing of the user ID. The central management unit 3 will compare the device related information, which may be a unique code, such as a MAC address, to the entries of devices, which are already part of the domain of the user. If the device is already entered, no further steps will be necessary and the device 2 be permitted to render any content, for which the user has obtained the rights.

If, however, the device 2 is not part of the domain so far, the central management unit 3 will apply policies, to determine whether the device 2 is to be included in the domain. These policies may be selected by the user or may be preset within the central management unit 3 and apply to all domains managed at the central management unit 3. Preferably the policies are applied flexibly. The policies may also be applied successively. As the domain according to this invention is a user-centric domain, the policies will include user related parameters.

One example of such a policy may be that the user, who wants to add a device 2 to his domain, has to be in close proximity to the device 2 to be added. The central management unit 3 will, according to the policy, issue an authentication request to confirm the association of the user to the device 2. If the policy prescribes the close proximity of the user to the device 2, the central management unit 3 will issue a request to the rendering device 2 to check for the availability of the user. This check may be done by displaying a prompt for entry of identification information at the rendering device 2. The identification information is preferably the same identification information as originally provided from the user, when first initiating the registration request. Alternatively the user may be represented by a token, in particular a hardware token 6, which can communicate with the rendering device 2. The token 6 may be the SIM card of a mobile phone 4. The rendering device 2 will thus try to establish a connection to the user or his token 6. The connection may be established via Bluetooth or any NFC connection standard. If the rendering device 2 is able to establish connection to the user via his token 6, the rendering device 2 may send the respective information to the central management unit 3, where the policy will be considered to be fulfilled and the device 2 will be added to the domain.

Instead of sending the authentication request to the rendering device 2, this request may be sent to the token 6 of the user, in particular to the mobile phone 4. In that case, the mobile phone 4 may establish connection to the rendering device 2 to obtain the device ID and send it to the central management unit 3.

It is also possible, that the policy of requiring the close proximity of the user to the device is verified by sending the request to the rendering device 2 or the token 6 and receiving the response from the respective other entity 6, 2. This channel of communication will automatically prove to the central management unit 3 that the two devices 6 or 4 and 2 are in close proximity.

The policy may also require the user to prove his ownership of the device 2. This can be done by entering a PIN code or any other unique information, which is only known to the user at the rendering device 2.

Another policy may prescribe that the location of the rendering device 2 has to be associated to the present location of the user. This may be done by involving positioning systems and matching the thus determined location of the user or his token 6 with the location known from the connection to the rendering device 2, for example by determination of the IP address or the node to which the IP address is connected.

A further example of a policy, including user related parameters, may prescribe that the user must have issued an authorisation for a given device to join the domain. This policy may apply, where the user ID is transmitted to the central management unit 3 from the rendering device 2 together with an indication of the user, which will be described later.

According to another embodiment of the inventive method the registration request may be transmitted from a mobile device 4 of the user to the central management unit 3.

This embodiment comprises similar steps to the ones described with reference to the first embodiment. In this case, however, the user identity information will preferably be transmitted from the mobile device. The user identity information may in particular be derived from a SIM card 6 of a mobile phone 4. The user ID will be received at the central management unit 3 and be transmitted to the remote assertion unit 5 for confirmation of the user ID. The confirmation can be performed within the assertion unit 5. It is, however, also possible that the assertion unit 5 may in addition issue a challenge to the mobile device 4, as already explained before, and assert the user ID in dependency of the response received from the mobile device 4.

The user may then indicate the device 2 to be added to his domain. The indication of the device 2 may, however, also already be performed, when the user first initializes the registration request from the mobile device 4. The device identification may be the MAC address or a code derived from the rendering device, for example by reading of a barcode on the rendering device 2.

The authentication of the user's association to the rendering device 2 may then again be performed as described above with reference to the first embodiment. In particular policies including parameters relating to the user will be monitored. The user token will in this case be the SIM card 6 of the mobile device or mobile phone 4.

In a third embodiment the registration request may origin from the rendering device 2. In this case the rendering device 2 will send both the ID of the user and the device identification to the central management unit 3. Upon confirmation of the user ID and preferably assertion of the user ID the central management unit 3 will add the device 2 to the domain, only if the policy prevailing for this domain is fulfilled. In particular, the user identity information has to comply with the prescribed parameters, e.g. the user is in close proximity to the rendering device.

In all three embodiments of the inventive method, the central management unit 3 may perform the comparison of entries of devices 2 for the requested domain before confirming and asserting the user ID. If the device is already entered, the confirmation and assertion of the user ID is unnecessary, as the device will not have to be added to the domain.

The registration request from a rendering device 2 to the central management unit 3 may be generated, when the user wants to add the device to the domain. It is, however, also possible that the registration request is generated, when a user wants to render a piece of digital content on a rendering device 2, which is not part of the domain so far.

A possible procedure in this case will now be described again with reference to Figure 1. If digital content is received at the DVD-Player 2, for example by means of a DVD, the DVD-Player 2 tries to render the content. If the content is protected, in particular encrypted, the DVD-Player 2 may send a request for the appropriate licence to render the content to a central management unit 3. Upon receipt of the licence request the management unit 3 will check for the availability of the appropriate licence.

The licenses will be stored in the central management unit sorted by user. In particular the devices entitled to render digital content, for which the user has obtained the rights, will be sorted by user, i.e. user-centric domains have been established at the central management unit 3. The central management unit 3 will therefore send a request to the rendering device 2 to obtain the user identity and provide this information to the central management unit 3. This user identification can then be sent to the central management unit 3 and the above described registration procedure, in particular the confirmation and assertion of the user ID and the authentication of the association of the user to the device, will be followed. If the policy of registration of a device 2 to the domain was the proximity of the user to the device 2, an additional authentication of the user-device association will not be necessary in this case, as the user already had to provide his user ID and it may thus be assumed that he is in proximity to the rendering device 2.

With the device being added to the domain the requested license or key to render the content on the rendering device 2 can then be transmitted to the rendering device 2.

With the present invention protected digital content may be shared freely among a set of devices, if the respective device is part of a user-centric domain. This means, that according to the present invention a domain of devices is assigned to one specific user or to a group of users. Those devices belonging to the user-centric domain can be controlled centrally. The user-centric domain will allow users to play their content on their devices at home, at work or for example in their car. Additionally the invention ensures, that the user can play their content on devices that are only used sporadically. Such sporadically used devices can for example be a rendering device owned by the friend of the user.

The user-centric domains implemented herein conform to their own policy to decide which devices can or can not be part of a domain. This decision is made based on a relationship with the user. The policy is flexible and may change depending on the state of the user.

In order to verify the compliance, with these policies, the user maybe identified by a secure token. Such as a secure token may for example be a SIM card included in a mobile phone. These tokens are suitable for representing the user towards a rendering device or any other entity within the system used for the present invention.

The present invention thus provides the end user with the highest level of flexibility, without diminishing the rights of the content owner or the content provider.

## Claims

1. Method for managing the usage of digital content on at least one rendering device (2), wherein the at least one rendering device (2) is part of a system with at least one central management unit (3), **characterized in that** the central management unit (3), upon receipt of a request for registering a rendering device (2) to a domain of rendering devices (2), issues a verification request including a parameter relating to a user identity.

2. Method according to claim 1, **characterized in that** the registration request is received from the rendering device (2) and includes user identity information.

3. Method according to claim 1 or 2, **characterized in that** the central management unit (3) issues the verification request internally, to the rendering device (2), to a mobile device (4) of the user and/or to a remote assertion unit (5).

4. Method according to claim 1 to 3, **characterized in that** the verification request comprises a request for user identity information, confirmation and/or assertion of user identity information and/or a request for confirmation of the association of the user to the rendering device (2).

5. Management unit (3) for managing the usage of digital content on at least one rendering device, **characterized in that** the management unit (3) comprises a storage unit for storing rendering device information sorted by users.

6. Management unit according to claim 5, **characterized in that** the management unit (3) comprises a comparison unit for comparing user identity information to entries of the storage unit.

7. Management unit according to claim 5 or 6, **characterized in that** the management unit (3) comprises an authentication unit for creating authentication requests to be transmitted to a remote assertion unit (5), the rendering device (2) and/or a mobile device (4).

8. Management unit according to any of claims 5 to 7, **characterized in that** the management unit (3) comprises a communication unit for communication with at least one remote assertion unit (5) and/or remote content server and/or rights server.

9. Rendering device for rendering of digital content in a system with at least one central management unit (3) for managing the usage of digital content on the rendering device (2), **characterized in that** the rendering device (2) comprises at least one communication unit for communication with at least one mobile device (4) and/or the central management unit (3).

10. Rendering device according to claim 9, **characterized in that** the communication unit comprises a receiving entity for receiving user identification information from the mobile device (4), in particular from a token (6) within the mobile device (4).
